# EUROPEAN PATENT APPLICATION

(11) **EP 3 862 971 A1**
(43) Date of publication of application: **11.08.2021**
(21) Application number: 19868888.9
(22) Date of filing: 18.09.2019
(51) Int. Cl.: G06T 9/00, G06T 17/00, H04N 5/92, H04N 19/597

(54) **INFORMATION PROCESSING DEVICE, INFORMATION PROCESSING METHOD, AND PROGRAM**

(30) Priority: 02.10.2018 JP 2018187816
(71) Applicant: Sony Group Corporation, Tokyo 108-0075 (JP)
(72) Inventor: TAKAHASHI Ryohei, Tokyo 108-0075 (JP); HIRABAYASHI Mitsuhiro, Tokyo 108-0075 (JP); NAKAGAMI Ohji, Tokyo 108-0075 (JP)
(74) Representative: D Young & Co LLP
(86) International application number: PCT/JP2019/036465
(87) International publication number: WO 2020/071111

(57) **Abstract**

The present disclosure relates to an information processing apparatus, an information processing method, and a program for enabling clients to perform processing efficiently.

From 3D data representing a three-dimensional structure, identification information regarding an individual stream of geometry information indicating a geometry of the three-dimensional structure and identification information regarding an individual stream of attribute information indicating an attribute of the three-dimensional structure are generated. A file is generated that includes generated multiple pieces of the identification information. The file is generated in a sample structure specifying boundaries of the geometry information and the attribute information. The present technology may be applied, for example, to a data generation apparatus for generating data for point cloud distribution and to a data reproduction apparatus for point cloud reproduction.

## Description

### [Technical Field]

The present disclosure relates to an information processing apparatus, an information processing method, and a program. More particularly, the present disclosure relates to an information processing apparatus, an information processing method, and a program for enabling clients to perform processing efficiently.

### [Background Art]

In the past, as disclosed in NPL 1, methods have been prescribed for compressing a point cloud, which is an aggregate of points located in a three-dimensional space and having geometry information and attribute information (color information in particular) at the same time.

One method of point cloud compression involves separating point cloud data into geometry indicative of a three-dimensional shape and attributes representing, for example, color and reflection information as attribute information, and coding the separated information. This method is called G-PCC (Geometry based Point Cloud Coding).

Use cases are expected in which G-PCC streams generated by this coding method are downloaded for reproduction and distributed over IP (Internet Protocol) networks. Thus, as disclosed in NPL 2, studies have begun in MPEG (Moving Picture Experts Group) on the distribution technology in an existing framework of ISOBMFF/DASH (ISO Base Media File Format/Dynamic Adaptive Streaming over HTTP) with a view to reducing the impact on the existing distribution platforms and aiming at early service implementation.

### [Citation List]

### [Non Patent Literature]

[NPL 1]
   MPEG-I Part 5 Point Cloud Compression (ISO/IEC 23090-5)
[NPL 2]
   w17675, First idea on Systems technologies for Point Cloud Coding, April 2018, San Diego, US

### [Summary]

### [Technical Problem]

Meanwhile, the generated G-PCC stream in the past was a single, continuous stream structured in such a manner that clients were not allowed to access geometry and attributes independently of each other. Thus, even in use cases where only geometry needs to be used or where only one of multiple attributes needs to be used, for example, clients are not allowed to access and obtain what is needed individually. As a result, the clients are required to obtain all geometry and attributes constituting the G-PCC stream before proceeding with necessary processes. This leads to a processing overhead for the clients and makes it difficult for them to carry out processing efficiently.

The present disclosure has been made in view of the above circumstances and is aimed at enabling clients to perform processing efficiently.

### [Solution to Problem]

According to a first aspect of the present disclosure, there is provide an information processing apparatus including a file generation section configured to generate, from 3D data representing a three-dimensional structure, identification information regarding an individual stream of geometry information indicating a geometry of the three-dimensional structure and identification information regarding an individual stream of attribute information indicating an attribute of the three-dimensional structure, the file generation section configured to generate a file that includes generated multiple pieces of the identification information.

Also according to the first aspect of the present disclosure, there is provide an information processing method or a program including from 3D data representing a three-dimensional structure, generating identification information regarding an individual stream of geometry information indicating a geometry of the three-dimensional structure and identification information regarding an individual stream of attribute information indicating an attribute of the three-dimensional structure, and generating a file that includes generated multiple pieces of the identification information.

Thus, according to the first aspect of the present disclosure, from 3D data representing a three-dimensional structure, identification information regarding an individual stream of geometry information indicating a geometry of the three-dimensional structure and identification information regarding an individual stream of attribute information indicating an attribute of the three-dimensional structure are generated. A file is then generated that includes generated multiple pieces of the identification information.

According to a second aspect of the present disclosure, there is provided an information processing apparatus including an extraction section configured in such a manner that, given a file that includes identification information regarding an individual stream of geometry information indicating a geometry of a three-dimensional structure represented by 3D data and identification information regarding an individual stream of attribute information indicating an attribute of the three-dimensional structure, the identification information being generated from the 3D data, the extraction section identifiably extracting, from the file, the geometry information and the attribute information according to a use case and on the basis of the identification information, and a building section configured to build the three-dimensional structure by use of the geometry information or the attribute information each extracted by the extraction section.

Also according to the second aspect of the present disclosure, there is provided an information processing method or a program including operating in such a manner that, given a file that includes identification information regarding an individual stream of geometry information indicating a geometry of a three-dimensional structure represented by 3D data and identification information regarding an individual stream of attribute information indicating an attribute of the three-dimensional structure, the identification information being generated from the 3D data, the geometry information and the attribute information are identifiably extracted from the file according to a use case and on the basis of the identification information, and building the three-dimensional structure by use of the geometry information or the attribute information each having been extracted.

Thus, according to the first aspect of the present disclosure, given a file that includes identification information regarding an individual stream of geometry information indicating a geometry of a three-dimensional structure represented by 3D data and identification information regarding an individual stream of attribute information indicating an attribute of the three-dimensional structure, the identification information being generated from the 3D data, the geometry information and the attribute information are identifiably extracted from the file according to a use case and on the basis of the identification information. The three-dimensional structure is then built by use of the geometry information or the attribute information each having been extracted.

### [Brief Description of Drawings]

[FIG. 1]

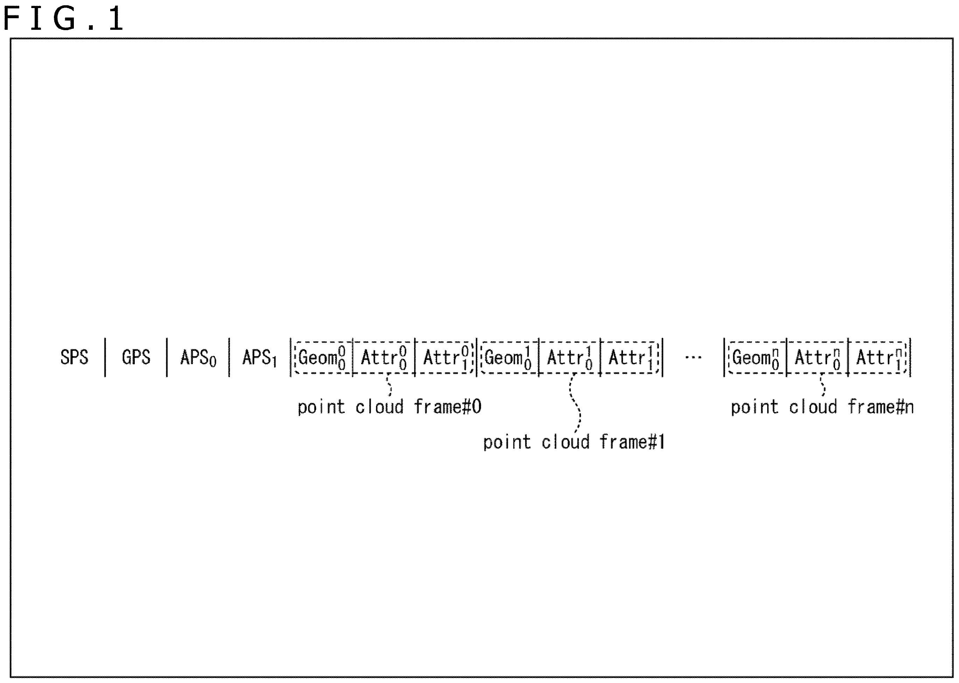

   FIG. 1 is a view depicting an existing stream structure.
[FIG. 2]

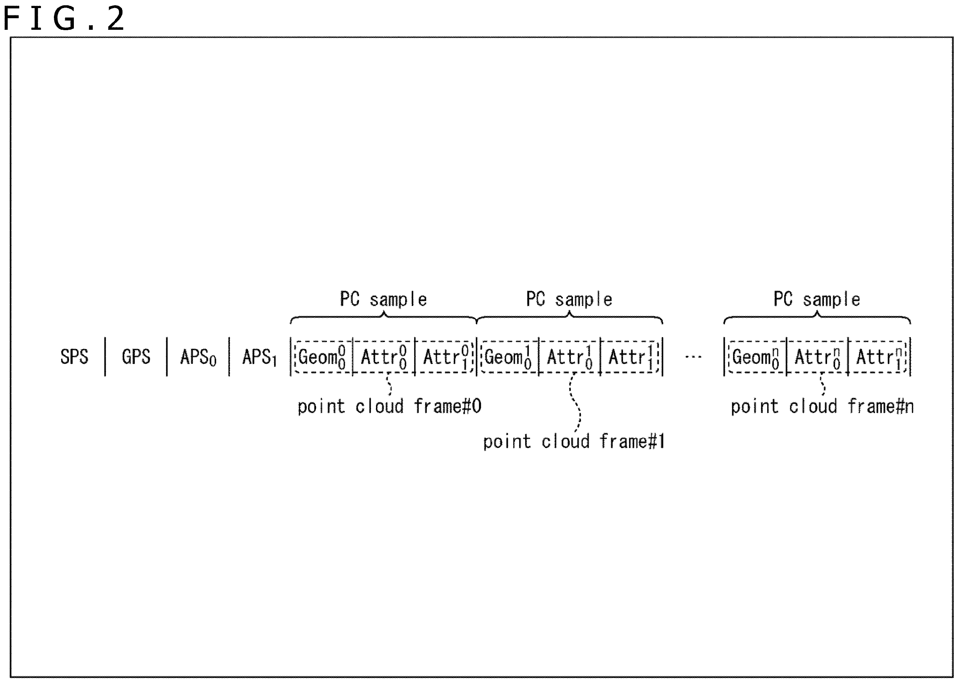

   FIG. 2 is a view explaining typical PC samples defined anew.
[FIG. 3]

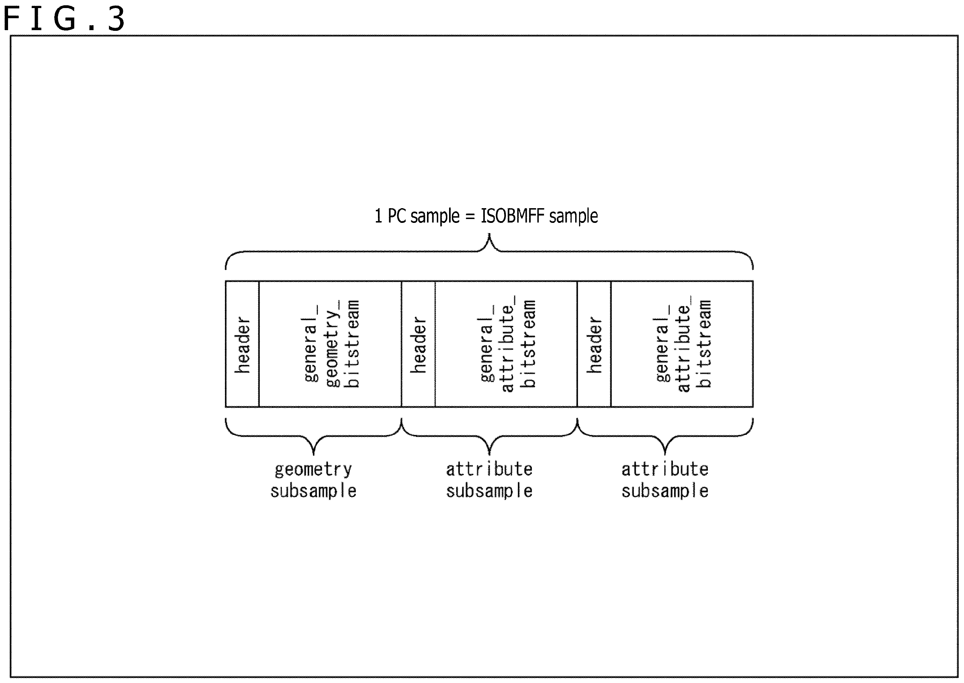

   FIG. 3 is a view depicting a typical PC sample.
[FIG. 4]

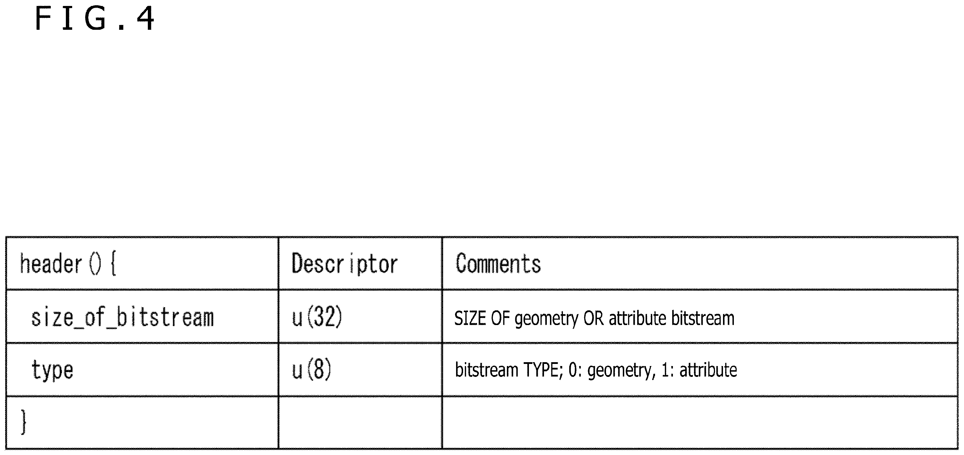

   FIG. 4 is a view depicting an example of information stored in a header.
[FIG. 5]

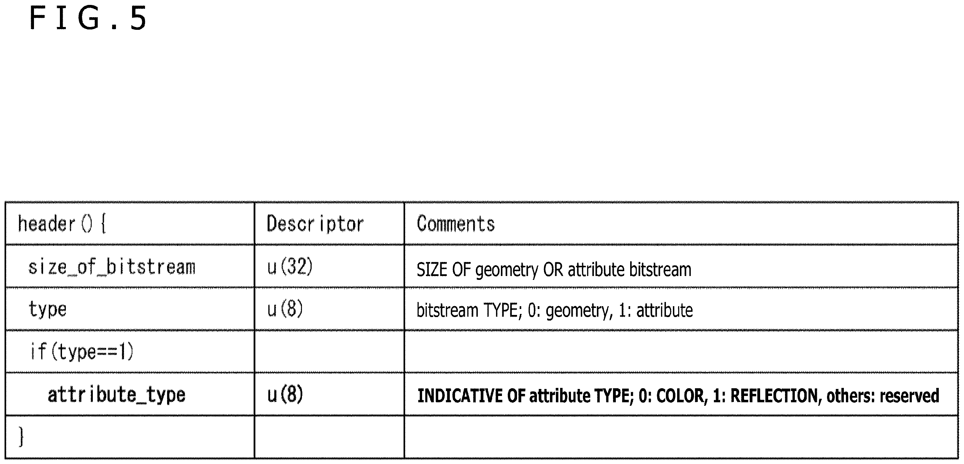

   FIG. 5 is a view explaining an example in which a field is added to signal an attribute type.
[FIG. 6]

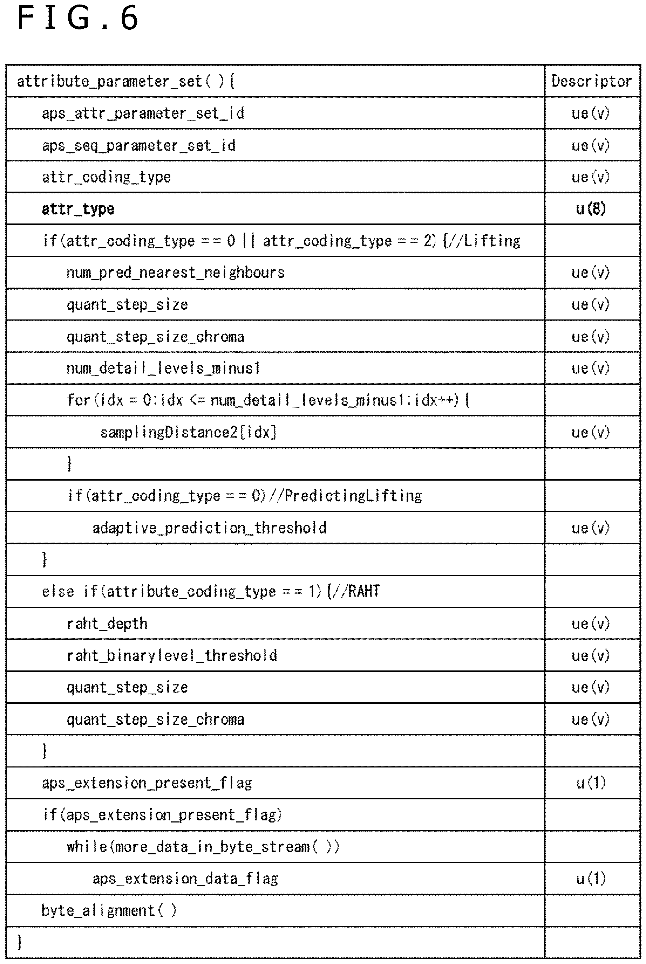

   FIG. 6 is a view depicting a typical Attribute parameter set.
[FIG. 7]

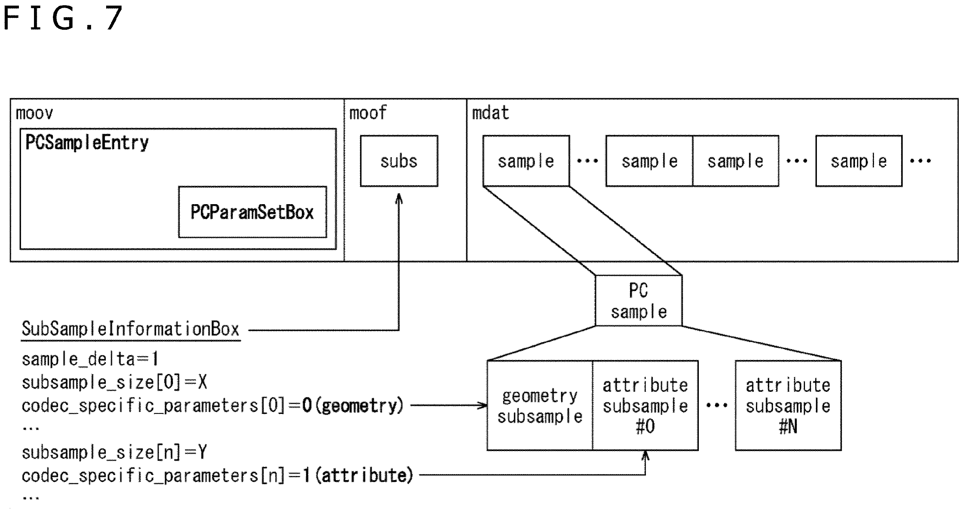

   FIG. 7 is a view depicting an example in which a G-PCC stream is stored into one track of the ISOBMFF.
[FIG. 8]

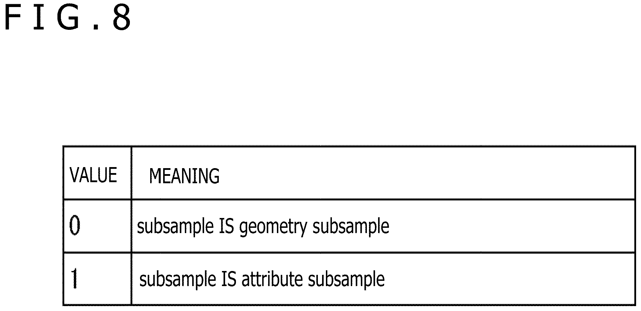

   FIG. 8 is a view depicting definitions of codec_specific_parameters.
[FIG. 9]

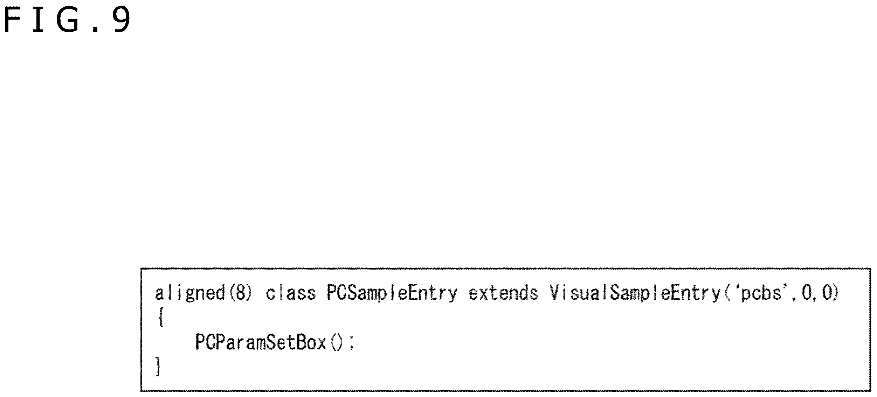

   FIG. 9 is a view depicting a newly defined structure of PCSampleEntry.
[FIG. 10]

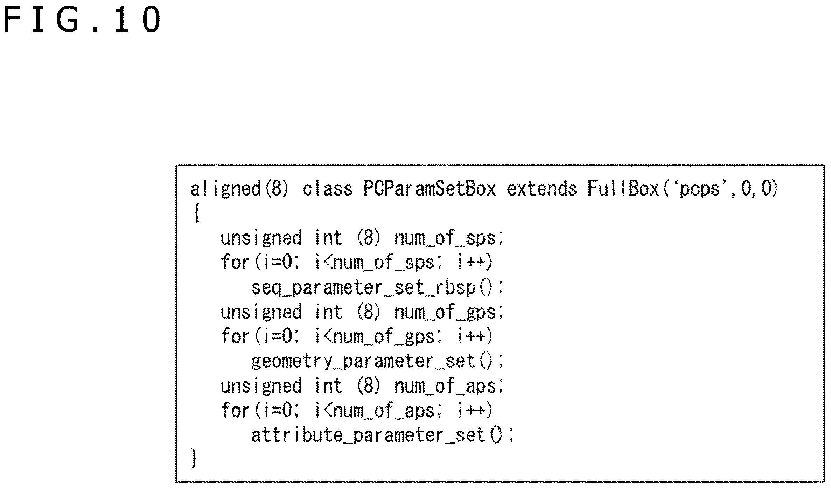

   FIG. 10 is a view depicting an example of PCParamSetBox.
[FIG. 11]

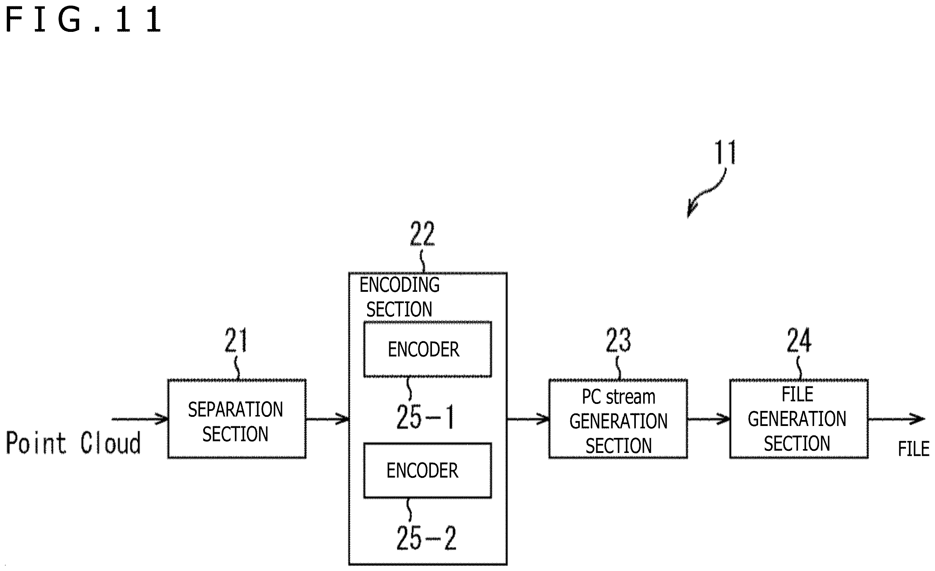

   FIG. 11 is a block diagram depicting a configuration example of an information processing apparatus for performing a file generation process.
[FIG. 12]
   FIG. 12 is a block diagram depicting a configuration example of an information processing apparatus for performing a Point Cloud reproduction process.
[FIG. 13] FIG. 13 is a flowchart explaining the file generation process.
[FIG. 14]

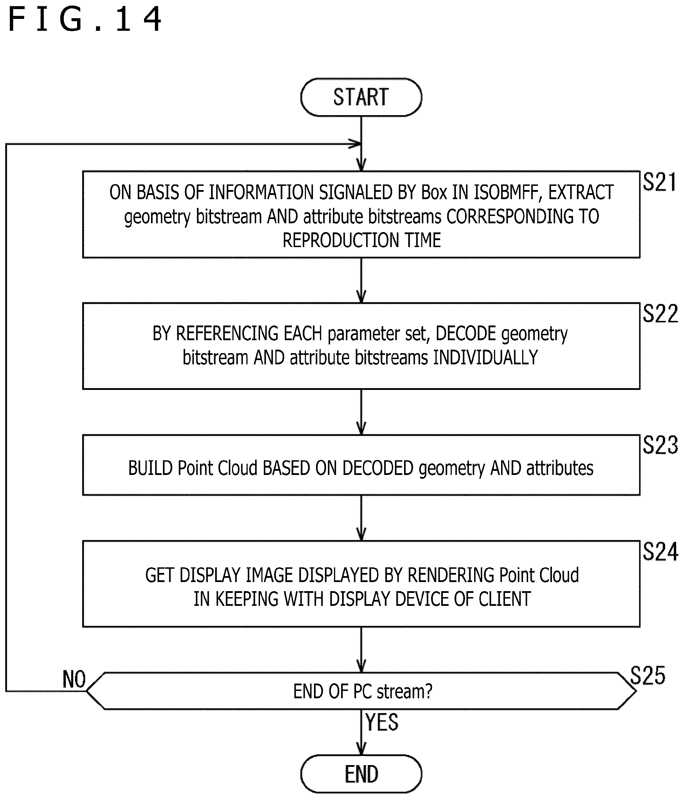

   FIG. 14 is a flowchart explaining the Point Cloud reproduction process.
[FIG. 15]

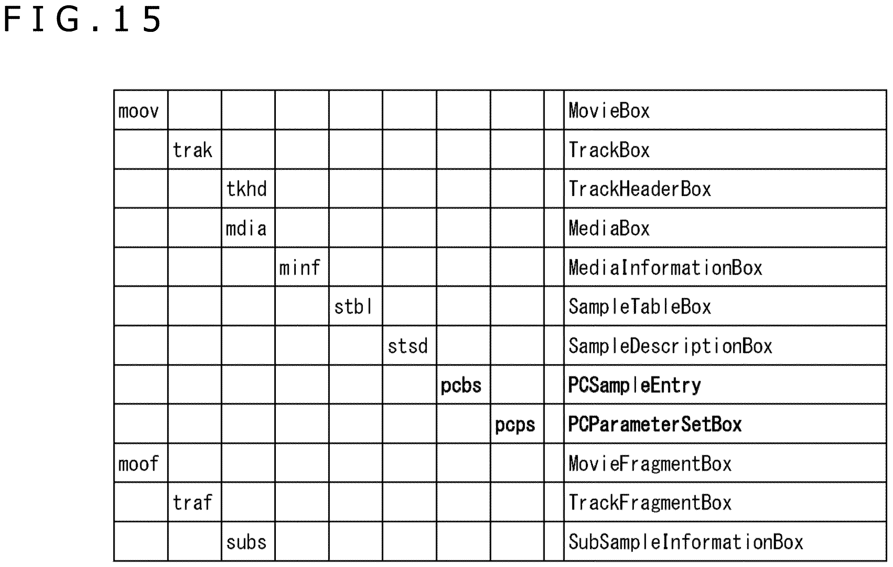

   FIG. 15 is a view depicting a typical ISOBMFF structure stored into one track by a second identification enabling method.
[FIG. 16]

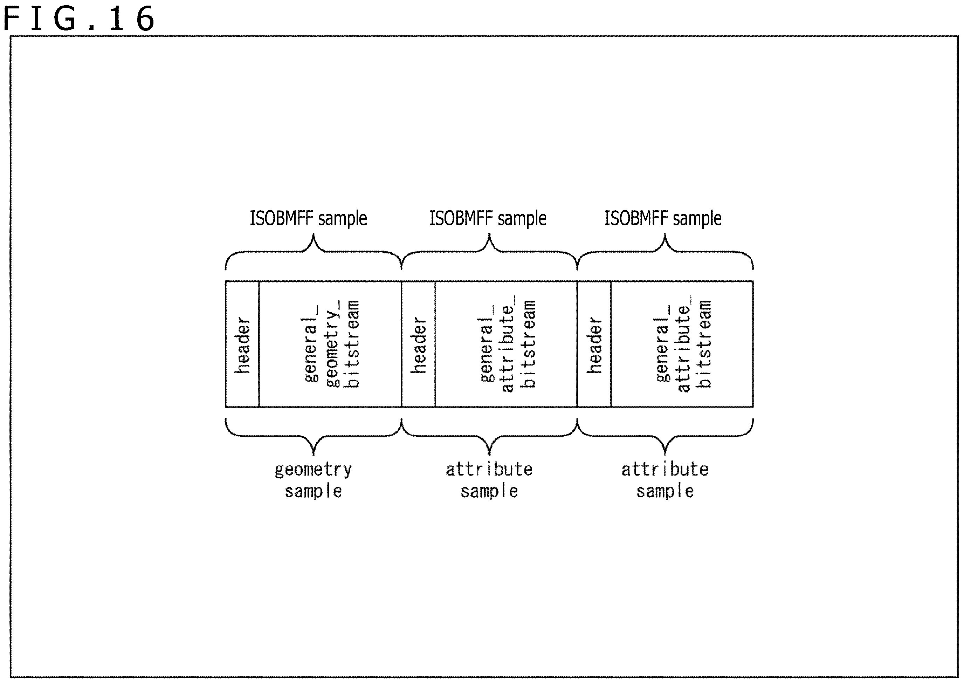

   FIG. 16 is a view depicting an alternative example of the ISOBMFF structure stored in one track.
[FIG. 17]

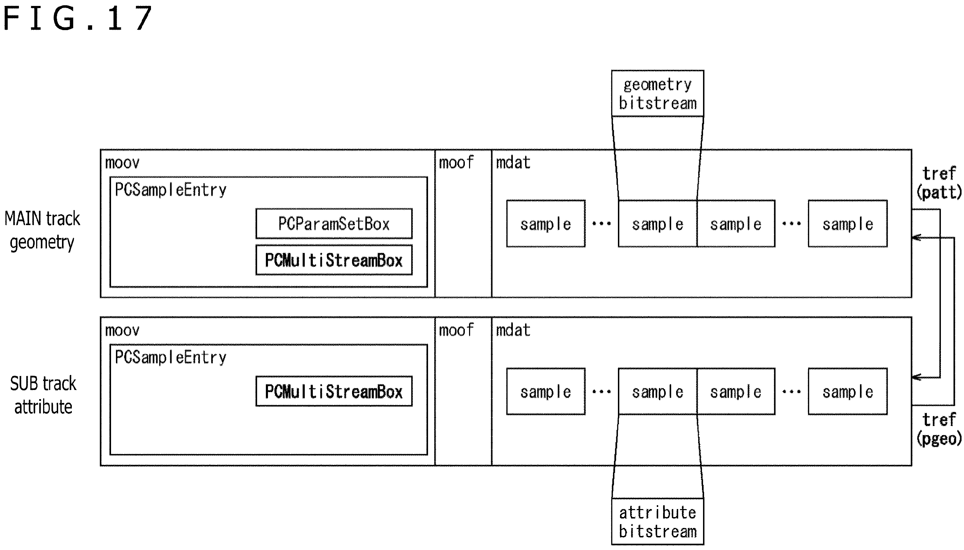

   FIG. 17 is a view depicting an example in which a geometry bitstream and an attribute bitstream are stored into two tracks of the ISOBMFF.
[FIG. 18]

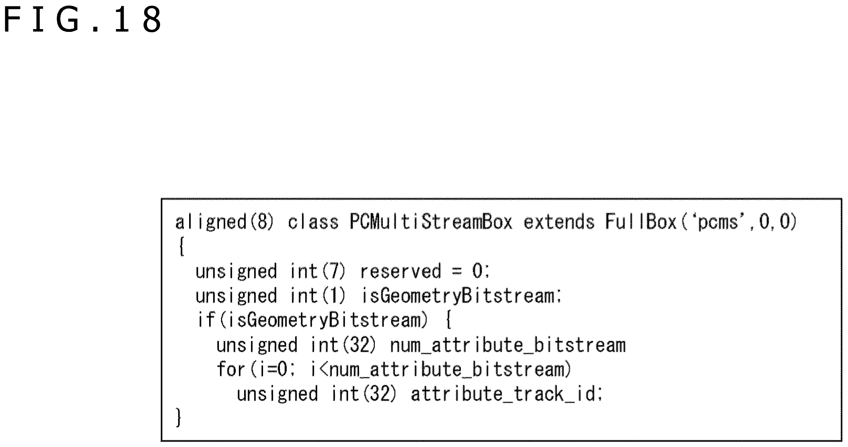

   FIG. 18 is a view depicting a typical syntax of PCMultiStreamBox.
[FIG. 19]

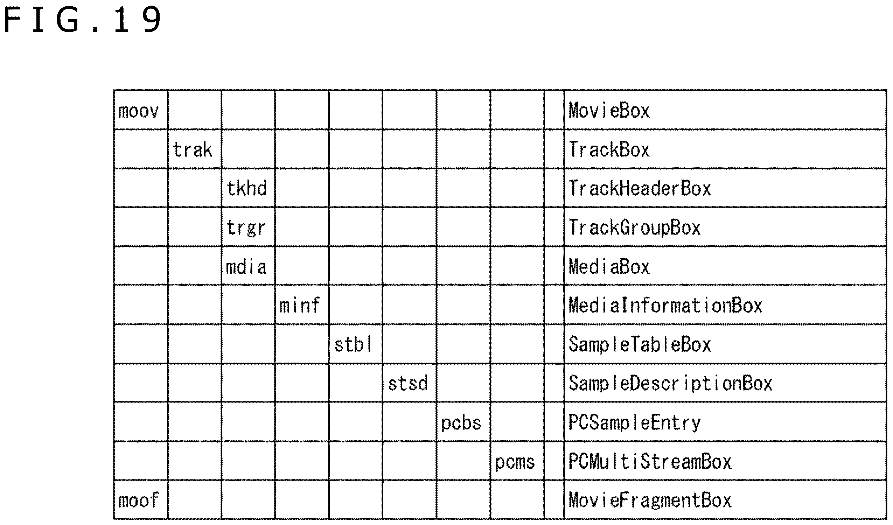

   FIG. 19 is a view depicting a first example of the ISOBMFF structure stored into two tracks by the second identification enabling method.
[FIG. 20]

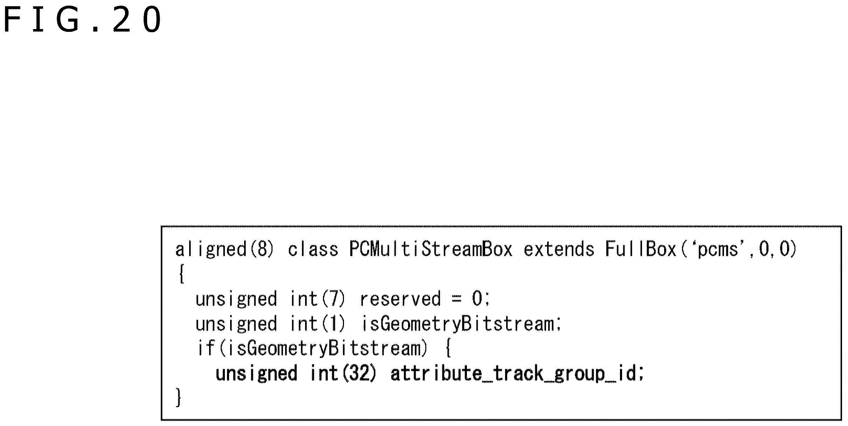

   FIG. 20 is a view depicting an alternative example of PCMultiStreamBox.
[FIG. 21]

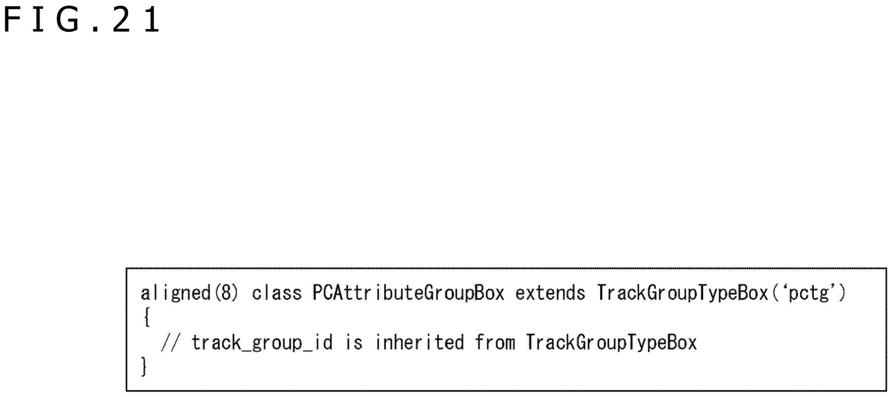

   FIG. 21 is a view depicting a typical syntax of PCAttributeTrackGroupBox.
[FIG. 22]

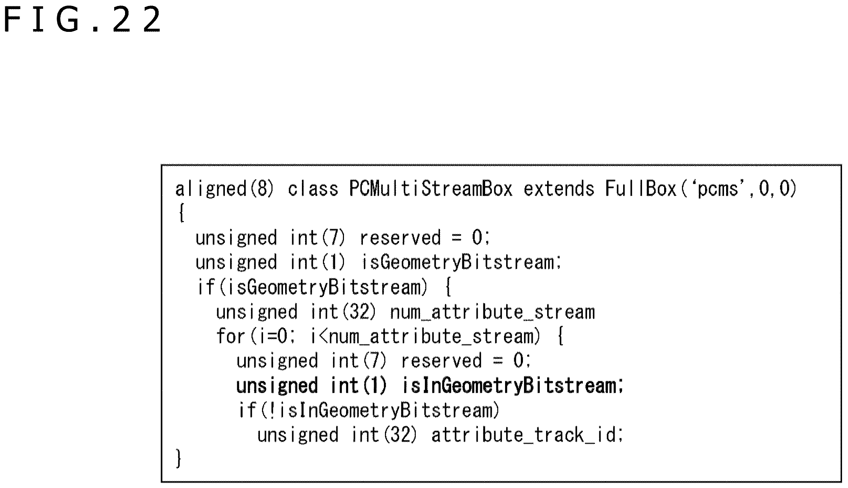

   FIG. 22 is a view depicting another alternative example of PCMultiStreamBox.
[FIG. 23]

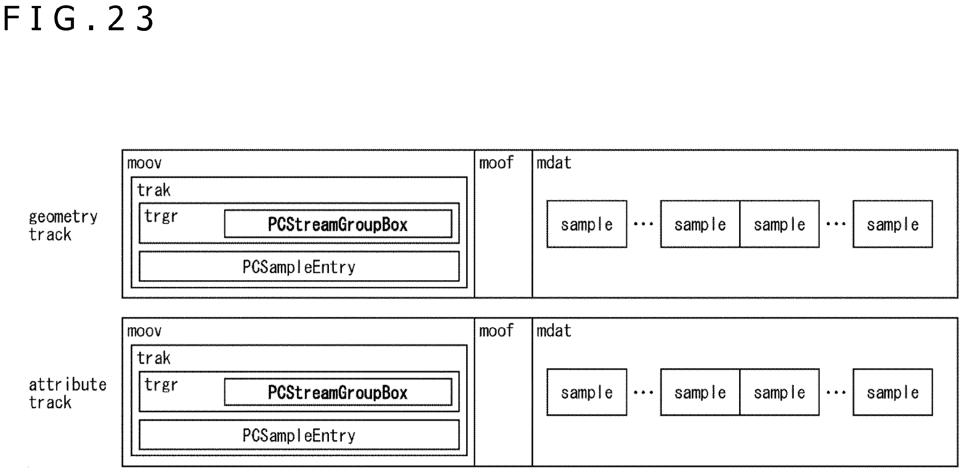

   FIG. 23 is a view depicting an example of signaling a geometry track and an attribute track associated by track group.
[FIG. 24]

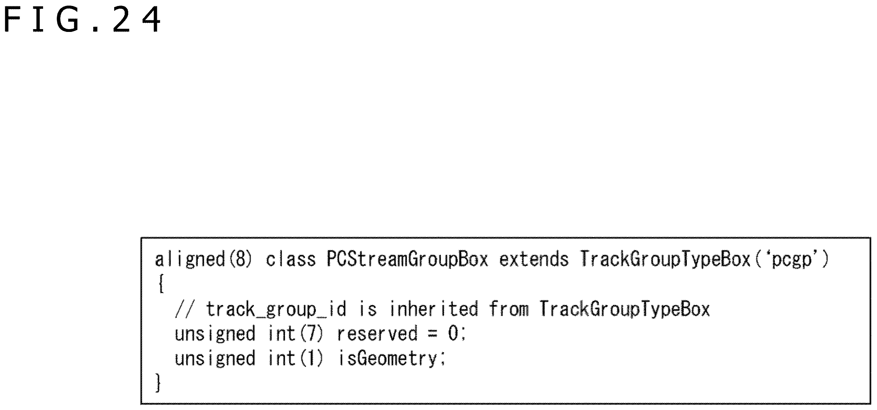

   FIG. 24 is a view depicting an example of PCStreamGroupBox defined anew.
[FIG. 25]

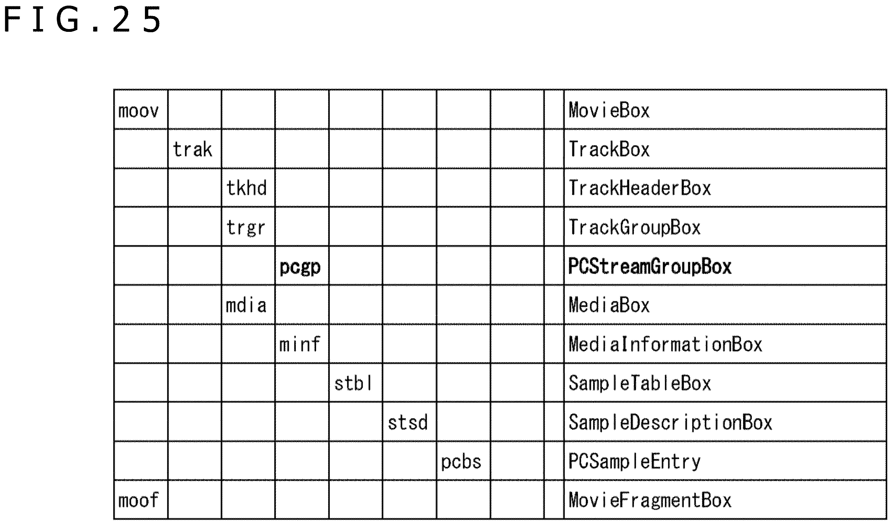

   FIG. 25 is a view depicting a second example of the ISOBMFF structure stored into two tracks by the second identification enabling method.
[FIG. 26]

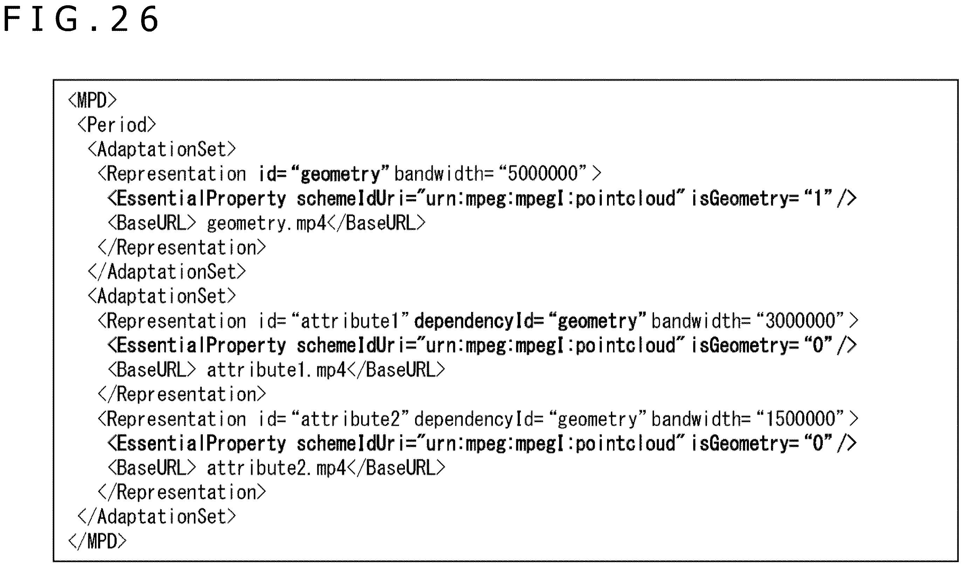

   FIG. 26 is a view explaining DASH signaling.
[FIG. 27]

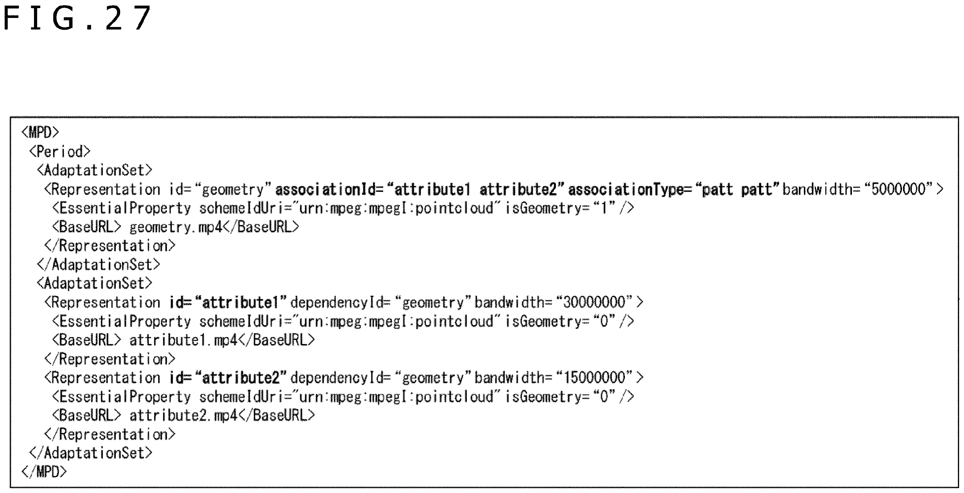

   FIG. 27 is another view explaining DASH signaling.
[FIG. 28]

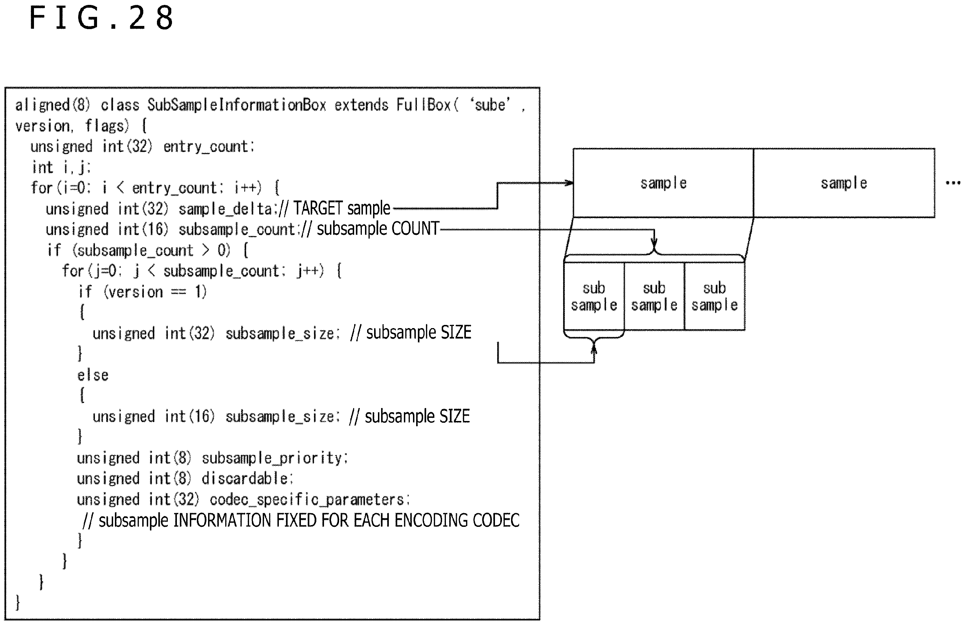

   FIG. 28 is a view depicting an outline of SubSampleInformationBox.
[FIG. 29]

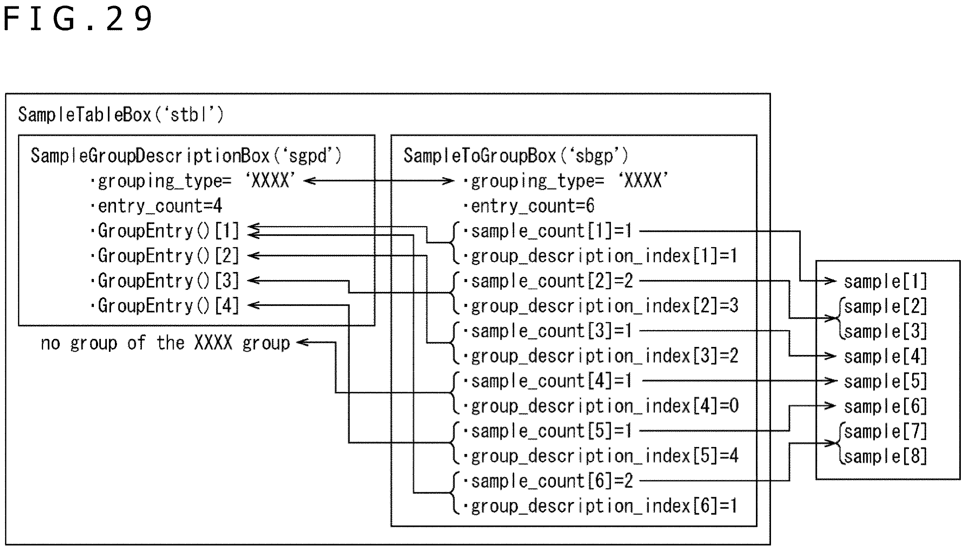

   FIG. 29 is a view depicting an outline of Sample Group.
[FIG. 30]

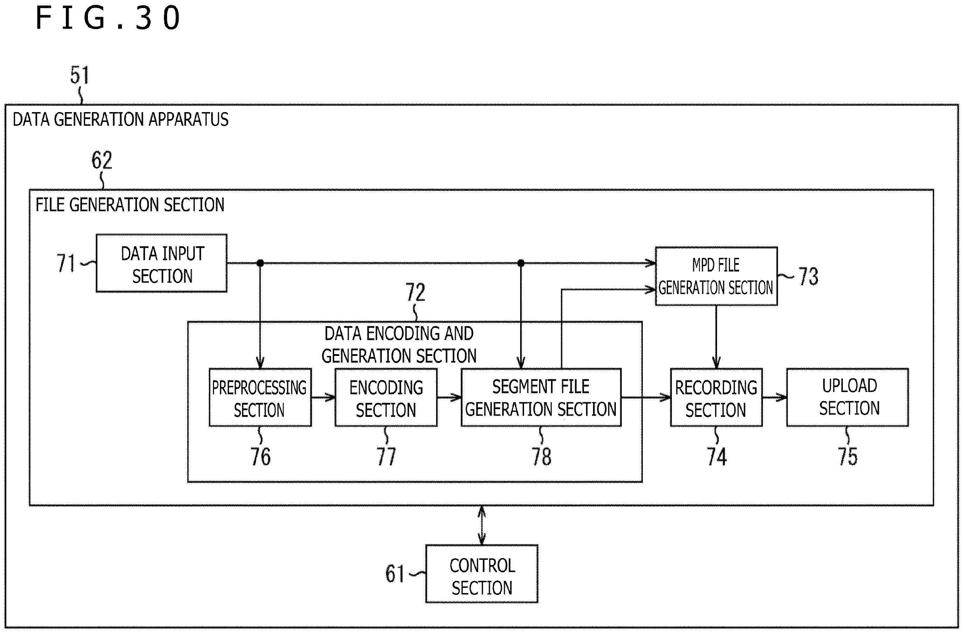

   FIG. 30 is a block diagram depicting a configuration example of a data generation apparatus.
[FIG. 31]

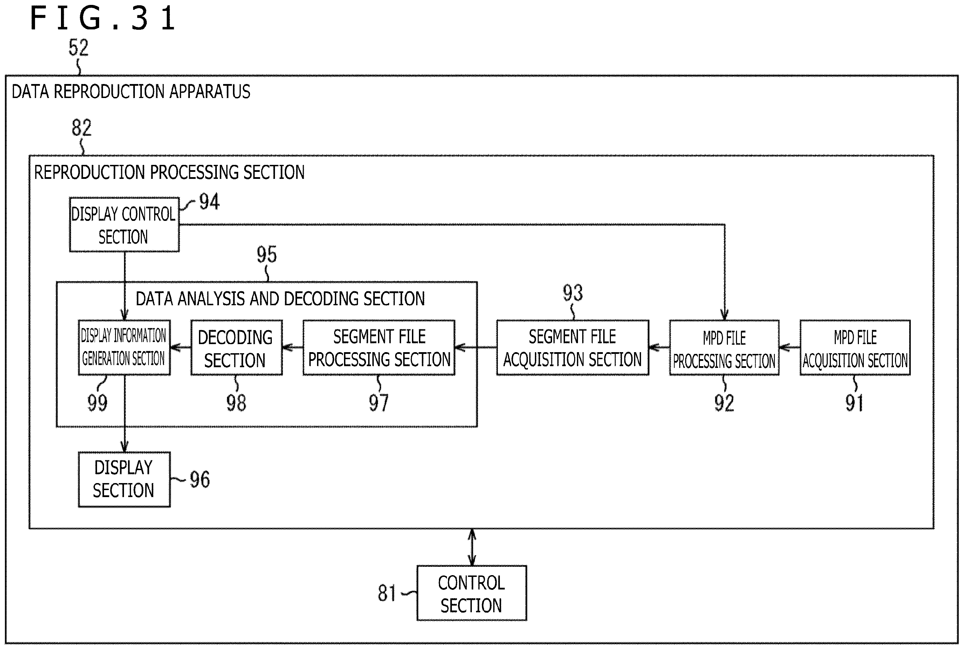

   FIG. 31 is a block diagram depicting a configuration example of a data reproduction apparatus.
[FIG. 32]

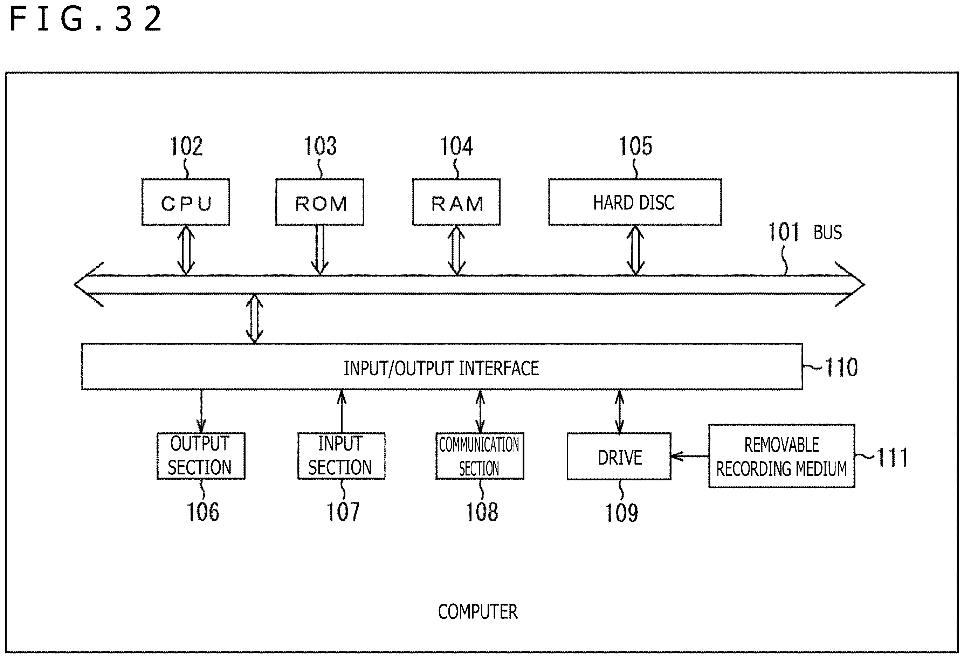

   FIG. 32 is a block diagram depicting a configuration example of an embodiment of a computer to which the present technology is applied.

### [Description of Embodiments]

Specific embodiments to which the present technology is applied are described below in detail with reference to the accompanying drawings.

### <Existing stream structure>

Before the ensuing description of the stream structure to which the present technology is applied, the existing stream structure is explained below with reference to FIG. 1.

FIG. 1 depicts a stream structure coded by G-PCC. Such a stream is referred to as the G-PCC stream (or simply the PC stream).

For example, the G-PCC stream is constituted by one stream as a sequence of point cloud frames arranged in the decoded order. Here, the point cloud frame (also referred to as the PC frame hereunder) signifies a point cloud displayed at the same time. The PC frame is a single continuous bitstream constituted by a geometry bitstream (Geom indicated in FIG. 1) representing three-dimensional information and by attribute bitstreams (Attr indicated in FIG. 1) representing attribute information such as color and reflection.

It is to be noted that one PC frame has one geometry bitstream and multiple attribute bitstreams (two attribute streams in the example of FIG. 1). An SPS (Sequence Parameter Set) stores meta information for each G-PCC stream sequence as common information required to decode the geometry bitstream and attribute bitstreams. A GPS (Geometry Parameter Set) stores information necessary for decoding the geometry bitstream, and an APS (Attribute Parameter Set) stores information necessary for decoding the attribute bitstreams.

A client decodes the geometry bitstream and attribute bitstreams in the G-PCC stream using separate decoders. The client first decodes the geometry bitstream to generate point cloud content devoid of colors. Thereafter, by referencing the decoded geometry bitstream information, the client decodes the attribute bitstreams so as to add attributes such as color and reflection to the content based on the referenced information.

Meanwhile, in addition to the general use case of the G-PCC stream in which colored point cloud data is reproduced, there are use cases where only the three-dimensional geometry information from the point cloud data is used with no need for the attribute information such as color and reflection. For example, there may be a use case where colored map information obtained by LiDAR (Light Detection and Ranging) and by camera is retained as point cloud data from which topography information (i.e., three-dimensional geometry information) alone is extracted and used for driving control of vehicles.

In a case where there are multiple pieces of attribute information such as color and reflection, there may be a use case, for example, in which the geometry information is desired to be used together with the color attribute but with no need for the reflection attribute. There may also be a use case in which given multiple color attributes, only one color attribute is desired to be extracted and used.

However, in the G-PCC stream structure, for example, decoding an attribute-provided PC frame requires dealing with a single bitstream that includes a geometry and multiple attributes without the presence of explicit boundary information. Thus, in such use cases, the client is required to obtain the entire geometry and attributes making up the PC frame and decode the stream sequentially from the beginning. Having to decode the unused attribute bitstreams lowers the efficiency of processing.

In order to solve the problem of declining efficiency, the present disclosure proposes a method by which information regarding the generated geometry bitstream and attribute bitstreams is generated anew as identification information to be included in a file generated for holding the identification information. The specific embodiments discussed below are arranged to enable the client to access the geometry and attributes independently for improved processing efficiency in the above-mentioned use cases.

### <Definition of the PC sample>

Explained below with reference to FIG. 2 is the Point Cloud sample (called the PC sample hereunder) defined anew as corresponding to the Sample defined by the ISOBMFF.

For example, one PC frame, which is a unit making up point cloud data displayed at the same time, is defined to be constituted by one PC sample. That is, the G-PCC stream is constituted by multiple PC samples, with each PC sample having a structure similar to that of the PC frame depicted in FIG. 2. As with one PC frame, the client can decode one PC sample to build a point cloud for display at the same time.

In such a manner, the PC sample is constituted by the geometry bitstream and attribute bitstreams making up the point cloud data to be displayed at the same time.

### <First identification enabling method>

A sample structure specifying the boundaries of a geometry and attributes is explained below with reference to FIGS. 3 to 6 as a first identification enabling method that enables the client to identify the geometry and attributes for the separation thereof.

FIG. 3 depicts a typical structure of one PC sample constituted by one geometry subsample and two attribute subsamples.

As depicted in FIG. 3, one PC sample is constituted by a geometry subsample, a first attribute subsample, and a second attribute subsample arranged continuously. Each subsample is structured to have header information and a corresponding bitstream, the header holding information regarding the bitstreams for the separation thereof.

FIG. 4 depicts an example of the information stored in the header in FIG. 3.

As depicted in FIG. 4, the header stores size information (size_of_bitstream) indicating the size of the geometry bitstream or the attribute bitstream, and type information (type) indicating the type of each of the bitstreams constituting the PC sample, as identification information. For example, in a case where the information indicating the bitstream type is 0, a geometry bitstream is indicated. In a case where the information indicting the bitstream type is 1, an attribute bitstream is indicated. The identification information identifies each of the bitstreams and is generated for each bitstream.

It is to be noted that the SPS, GPS, and APS not stored in the PC sample are stored in a sample entry in a case of the ISOBMFF, for example (see FIGS. 9 and 10 to be discussed later).

The above signaling enables the client to identify the boundary of each bitstream based on the header. As a result, the client can extract only the geometry bitstream from the PC sample for independent decoding. Similarly, the client can extract only the required attribute bitstream from the PC sample for decoding. The client can then input the geometry bitstream and attribute bitstream easily to different corresponding decoders for decoding.

Further, in a case where type=1 (i.e., the bitstream is an attribute bitstream) as indicated in bold letters in FIG. 5, the header may be extended to add a field (attribute_type) signaling the attribute type. For example, in a case where the field signaling the attribute type is 0, the attribute type is indicated as color. In a case where the field signaling the attribute type is 1, the attribute type is indicated as reflection. Alternatively, the field signaling the attribute type may be used to indicate other types.

As another alternative, the high level syntax of the G-PCC stream may be extended to signal the attribute type.

For example, the attribute parameter set may be extended to signal attr_type, as indicated in bold letters in FIG. 6. The attribute parameter set to be referenced is signaled as an identifier in the attribute bitstream. Incidentally, the semantics is similar to that of the above-mentioned attribute_type.

As described above, the first identification enabling method enables the client to reference the headers to identify the geometry and attributes and individually access what is identified. This makes it possible to perform processing efficiently even in use cases where a desired attribute alone is to be used.

### <Second identification enabling method>

A track extension of the ISOBMFF for storing sub sample information, geometry, and attributes is explained below with reference to FIGS. 7 to 24 as a second identification enabling method that enables the client to identify the geometry and attributes for the separation thereof.

Explained first with reference to FIGS. 7 to 15 is a case where the geometry bitstream and attribute bitstreams of the G-PCC stream are stored into one track of the ISOBMFF by the second identification enabling method.

FIG. 7 depicts an example in which the G-PCC stream is stored in one ISOBMFF track.

For example, moov of the ISOBMFF stores PCSampleEntry (see FIG. 9) defined anew. The PCSampleEntry is constituted by PCParamSetBox indicated in FIG. 10.

Also, the moov of the ISOBMFF stores subs (SubSampleInformationBox). As depicted in FIG. 7, the SubSampleInformationBox may be used to signal the boundaries of the geometry subsample and attribute subsamples #0 to #N in the PC sample. Incidentally, the SubSampleInformation will be explained with reference to an outline of the SubSampleInformationBox in FIG. 28 to be discussed later.

The samples stored in mdat of the ISOBMFF are PC samples such as one depicted in FIG. 3. The headers of the PC samples store the size information and type information.

Here, as depicted in FIG. 8, the SubSampleInformationBox defines codec_specific_parameters as the subsample information fixed for each codec. That is, when the value of the codec_specific_parameters is 0, the subsample is indicated as a geometry subsample. When the value of the codec_specific_parameters is 1, the subsample is indicated as an attribute subsample.

It is to be noted that the subsample information may be provided in units of continuous attribute subsample groups. Also, the codec_specific_parameters may be further extended to signal the attribute bitstream type of the subsample (i.e., color attribute, reflection attribute, etc.).

FIG. 9 depicts a PCSampleEntry structure defined anew in the present disclosure.

In the structure depicted in FIG. 9, the sample entry of the ISOBMFF track storing the G-PCC stream is 'pcbs,' for example.

The PCParamSetBox stores various parameter sets indicated in FIG 10 (Sequence Parameter Set, Geometry Parameter Set, and Attribute Parameter Set). For example, these parameter sets are referenced when the PC sample is decoded. Usually, the parameter sets are not the information to be modified in units of PC samples. Thus, storing the parameter sets in the PCSampleEntry eliminates the need for signaling the same information repeatedly in each PC sample, which reduces the file size. Incidentally, the locations in which the parameter sets may be stored include seq_parameter_set_rbsp(), geometry_parameter_set(), and attribute parameter_set() in the PCParamSetBox.

The above signaling enables the client to identify the boundaries between the geometry subsample and the attribute subsamples (or between the attribute subsamples) without parsing the subsample content. That is, the client can extract and decode independently only the geometry bitstream from the PC sample by a simplified process of referencing solely the system layer signaling. Likewise, the client can extract and decode only the necessary attribute bitstream from the PC sample. Furthermore, the client can input the geometry bitstream and attribute bitstreams easily to different corresponding decoders.

### <Configuration examples of the information processing apparatus>

FIG. 11 is a block diagram depicting a configuration example of an information processing apparatus performing a file generation process that involves generating a PC stream from point cloud data and generating a file defined by the ISOBMFF for storing the generated PC stream.

As depicted in FIG. 11, an information processing apparatus 11 includes a separation section 21, an encoding section 22, a PC stream generation section 23, and a file generation section 24.

The separation section 21 separates the geometry and attributes from the input point cloud data and supplies the separated geometry and attributes to the encoding section 22.

The encoding section 22 individually encodes the geometry and the attributes supplied from the separation section 21 so as to generate a geometry bitstream and attribute bitstreams. At this point, the encoding section 22 generates the parameter sets (Sequence Parameter Set, Geometry Parameter Set, and Attribute Parameter Set) to be referenced upon decoding of the geometry bitstream and attribute bitstreams. For example, the encoding section 22 encodes the geometry using Octree and the attributes using Lifting coding or Region Adaptive Haar Transform. At this point, the encoding section 22 may use two encoders 25-1 and 25-2 to encode the geometry and the attributes in parallel.

The PC stream generation section 23 generates PC samples such as one depicted in FIG. 3 by interleaving, in units making up the PC frame, the geometry bitstream and attribute bitstreams encoded by the encoding section 22. The PC stream generation section 23 then generates a PC stream constituted by multiple PC samples and supplies the generated PC stream to the file generation section 24.

The file generation section 24 stores the geometry bitstream and attribute bitstreams into one track of a file defined by the ISOBMFF, thereby generating the file. At this point, the file generation section 24 generates size information indicating the size of the geometry bitstream or of the attribute bitstreams and type information indicating the type of each of the bitstreams making up the PC sample and stores the generated information into the headers of the generated file as above-mentioned identification information.

The information processing apparatus 11 configured as described above thus generates a PC stream from point cloud data and outputs a file in which the PC stream is stored in one track.

Also, when the information processing apparatus 11 stores the G-PCC stream into the file defined by the ISOBMFF signaling a box including metadata, the file sample defined by the ISOBMFF is a PC sample (see FIGS. 3 and 7).

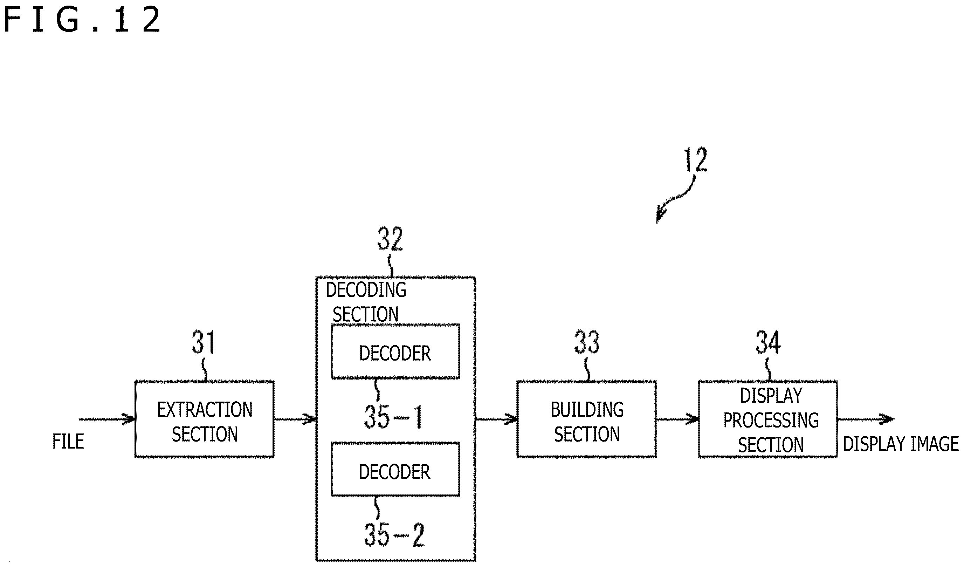

FIG. 12 is a block diagram depicting a configuration example of an information processing apparatus executing a point cloud reproduction process on the side of a client that reproduces content, the process involving generation of a display image from a file to reproduce point cloud data.

As depicted in FIG. 12, an information processing apparatus 12 includes an extraction section 31, a decoding section 32, a building section 33, and a display processing section 34.

On the basis of information signaled by a box in the ISOBMFF (e.g., above-mentioned identification information), the extraction section 31 extracts, from the file, the geometry bitstream and attribute bitstreams corresponding to a reproduction time and supplies the extracted bitstreams to the decoding section 32. At this point, the extraction section 31 can identify the geometry and attributes and extract only the required geometry or attribute according to the above-described diverse use cases. Alternatively, on the basis of the identification information stored in the headers of the subsamples, the extraction section 31 may extract, from the file, the geometry bitstream and attribute bitstreams corresponding to the reproduction time and supply the extracted bitstreams to the decoding section 32.

The decoding section 32 references each of the parameter sets to decode the geometry bitstream and attribute bitstreams supplied from the extraction section 31 and supply the decoded geometry and attributes to the building section 33. At this point, the decoding section 32 may use two decoders 35-1 and 35-2 to decode the geometry bitstream and attribute bitstreams individually and in parallel.

The building section 33 builds point cloud data by using the geometry and attributes supplied from the decoding section 32.

The display processing section 34 renders the point cloud data built by the building section 33 in keeping with the display device of the client, thereby generating a display image and causing the display device, not depicted, to display the generated display image.

The information processing apparatus 12 configured as described above thus reproduces point cloud data from the file, renders the point cloud data into a display image, and displays the image.

### <Examples of the file generation process and point cloud reproduction process>

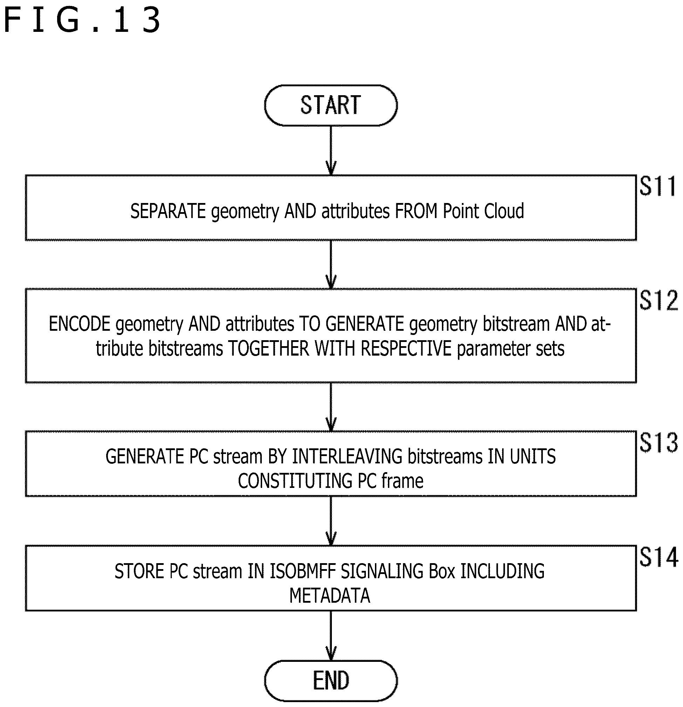

FIG. 13 is a flowchart explaining the file generation process performed by the information processing apparatus 11 in FIG. 11 to generate a file from point cloud data.

For example, the process is started when point cloud data is input to the information processing apparatus 11. In step S11, the separation section 21 separates the geometry and attributes from the input point cloud.

In step S12, the encoding section 22 encodes the geometry and attributes separated by the separation section 21 in step S11 so as to generate a geometry bitstream and attribute bitstreams. At this point, the encoding section 22 generates the parameter sets.

In step S13, the PC stream generation section 23 generates a PC stream by interleaving, in units (PC samples) making up the PC frame, the geometry bitstream and attribute bitstreams generated in step S12.

In step S14, the file generation section 24 generates a file by storing the PC stream generated in step S13 into the ISOBMFF signaling a box including metadata. Also, the file generation section 24 generates size information and type information and stores the generated information into the headers of this file. At this point, the sample of the ISOBMFF is a PC sample.

FIG. 14 is a flowchart explaining the point cloud reproduction process performed by the information processing apparatus 12 depicted in FIG. 12 to generate a display image from a file generated by the information processing apparatus 11 so as to reproduce the generated display image.

For example, the process is started when the file is supplied starting from the beginning thereof to the information processing apparatus 12. In step S21, on the basis of the information signaled by a box in the ISOBMFF (e.g., above-mentioned identification information), the extraction section 31 extracts, from the file, the geometry bitstream and attribute bitstreams corresponding to a reproduction time. Alternatively, the extraction section 31 may extract, from the file, the geometry bitstream and attribute bitstreams corresponding to the reproduction time on the basis of the identification information stored in the subsample headers.

In step S22, by referencing the parameter sets, the decoding section 32 decodes individually the geometry bitstream and attribute bitstreams extracted in step S21. At this point, the geometry bitstream and attribute bitstreams are decoded individually using a two-decoder instance.

In step S23, the building section 33 builds point cloud data by use of the geometry and attributes obtained by decoding in step S22.

In step S24, the display processing section 34 renders the point cloud data built in step S23 into a display image in keeping with the display device of the client, and causes the display image to be displayed.

In step S25, the extraction section 31 determines whether or not the end of the PC stream is reached. In a case where the end of the PC stream is not reached yet, control is returned to step S21. In a case where the end of the PC stream is reached, the process is terminated.

The above-described file generation process and point cloud reproduction process contribute to carrying out processing efficiently on the client side.

FIG. 15 depicts a first example of the ISOBMFF structure at a time when a geometry bitstream and attribute bitstreams are stored into one track of the ISOBMFF by the second identification enabling method.

As an alternative example, a geometry bitstream and attribute bitstreams making up one PC frame may each be stored as one sample into the ISOBMFF without using the PC sample, as depicted in FIG. 16. At this point, the geometry subsample and attribute subsamples become a geometry sample and attribute samples, respectively.

As another alternative, a geometry sample and an attribute sample(s) making up one PC frame may be signaled by use of a sample group. Likewise, the boundaries of the geometry sample and attribute samples may be signaled using a sample group. It is to be noted that the sample group will be explained with reference to FIG. 29 to be discussed later.

Here, in a case where a PC sample that is not a moving image and has no time information (i.e., not a stream of multiple continuous PC samples but a stream of a single PC sample) is stored in the ISOBMFF, similar information need only be signaled in MedaDataBox.

Explained next with reference to FIGS. 17 to 25 is how the second identification enabling method is used to store a geometry bitstream and attribute bitstreams of a G-PCC stream individually into each of the tracks of the ISOBMFF.

FIG. 17 depicts a two-track example in which a G-PCC stream is separated into one geometry bitstream and one attribute bitstream, the geometry bitstream being stored in one track of the ISOBMFF, the attribute bitstream being stored in another track of the ISOBMFF.

When the geometry bitstream and the attribute bitstream are thus stored individually in two tracks as described above, the client can process only the track storing the geometry bitstream so as to easily decode the geometry bitstream alone. Likewise, the client can process only the track storing one attribute bitstream so as to easily decode solely the necessary attribute bitstream. Also, the client can easily input the geometry bitstream and the attribute bitstream to different corresponding decoders.

As depicted in FIG. 17, the track storing the geometry bitstream is called the geometry track or the main track, and the track storing the attribute bitstream is called the attribute track or the sub track. The relation of association between these tracks is signaled by track reference and by a newly defined PCMultiStreamBox.

Also in the example depicted in FIG. 17, only the main track has the PCParamSetBox that includes the Sequence Parameter Set, Geometry Parameter Set, and Attribute parameter set. Alternatively, both the main track and the sub track may have the PCParamSetBox each. In this case, the PCParamSetBox in the main track may include the Sequence Parameter Set and Geometry Parameter Set, and the PCParamSetBox in the sub track may include the Attribute Parameter Set.

Further, the sample group signaling the boundaries of the PC frame may be signaled. Also, one geometry track may be associated with multiple attribute tracks of different bitrates.

FIG. 18 depicts a typical syntax of the PCMultiStreamBox.

For example, in a case where isGeometryStream=1, a geometry track is indicated. Otherwise, an attribute track is indicated. In a case of the geometry track, track _id of the attribute track associated therewith is signaled.

The above signaling, with the track reference indicated, allows the client to identify which is the geometry track by simply parsing TrackReferenceBox of any one track. Thereafter, the client can parse the PCMultistreamBox of the geometry track to identify all associated attribute tracks. That is, the client can identify the entire structure by simply parsing two tracks at most. In particular, this makes it possible to simplify the processing of cases where multiple attribute tracks are associated.

Alternatively, in a case where the PCMultistreamBox is extended with isGeometryBitstream=0 (i.e., the bitstream is an attribute bitstream), a field (attribute_type) may be added to signal the attribute type (color, reflection, etc.). As another alternative, the attribute track may be arranged to include multiple attribute bitstreams corresponding to multiple attribute types.

FIG. 19 depicts an example of the ISOBMFF structure in which a geometry bitstream and an attribute bitstream are individually stored into two tracks of the ISOBMFF by the second identification enabling method.

As another alternative example of the PCMultiStreamBox syntax, multiple attribute tracks may be collectively signaled by a track group and associated with an attribute track group by attribute_track_id, as depicted in FIG. 20.

In this case, as depicted in FIG. 21, the track group newly defines PCAttributeTrackGroupBox, with track_group_type being 'pctg.'

Also, as indicated in FIG. 22 in bold letters, the PCMultiStreamBox may be supplemented with isInGeometryStream that indicates whether or not an attribute is stored in the same track as that of the geometry. This provides the box that can signal cases where both geometry and the attribute are stored in one track as described above.

Alternatively, in place of the PCMultiStreamBox, the geometry track and attribute track associated by a track group may be signaled as depicted in FIG. 23.

Also, as depicted in FIG. 24, the track group newly defines PCStreamGroupBox, with track_group_type being 'pcgp.' At this point, the track having pcgp of the same track_group_id constitutes a single PC stream. For example, if isGeometry=0, then the track is indicated as an attribute track. If isGeometry=1, the track is indicated as a geometry track.

Alternatively, in a case where the PCStreamGroupBox is extended and isGeometry=0 (i.e., the bitstream is an attribute bitstream), a field (attribute_type) may be added to signal the attribute type (color, reflection, etc.).

FIG. 25 depicts a second example of the ISOBMFF at a time when a geometry bitstream and an attribute bitstream are stored into one track of the ISOBMFF by the second identification enabling method.

The above-described second identification enabling method enables the client to identify the geometry and attributes by referencing the subsample-related information (SubSampleInformationBox) or the information indicating the relation of association between the tracks (PCMultiStreamBox) and to gain individual access to what is identified. Thus, the client can perform processing efficiently even in use cases where only the desired geometry or the necessary attribute is to be used.

### <Third identification enabling method>

Explained below with reference to FIGS. 26 and 27 is a method of association in DASH MPD (Media Presentation Description) as a third identification enabling method for enabling the client to identify the geometry and attributes for the separation thereof in a case where the geometry and the attributes are stored in separate tracks.

For example, in the DASH MPD, SupplementalProperty or EssentialProperty@schemeIdUri=="urn:mpeg:mpegI:pointcloud" is defined as PC Component Descriptor, as depicted in FIG. 26. Also in the DASH MPD, Representation indicates either attribute or geometry.

Further, Representation@dependencyId is used to provide association from attribute representation to geometry representation. This is necessitated by the relation of dependency stating that attributes can be mapped solely in the presence of a geometry at the time of presentation.

It is to be noted that, in a case where the Representation is an attribute, an attribute type descriptor (SupplementalProperty or EssentialProperty@schemeIdUri=="urn:mpeg:mpegI:pc_attribute_type") may be added to signal the attribute type (color, reflection, etc.).

The above signaling allows the client to reference the PC Component Descriptor when obtaining DASH-distributed content and to acquire independently the geometry bitstream constituting the PC stream. Likewise, the client can independently decode the attribute bitstream. Also, according to the network bandwidth, for example, the client can switch the image quality of the attribute bitstreams associated with the geometry bitstream.

Furthermore, as depicted in FIG. 27, Representation@associationID may be used to provide association from geometry representation to attribute representation. Here, associationType is "patt." Because the geometry on its own enables presentation of a colorless point cloud, the association by use of associationId is appropriate.

The above-described third identification enabling method enables the client to identify the geometry and attributes based on the association in the DASH MPD and to gain individual access to what is identified. Thus, the client can perform processing efficiently even in use cases where only a desired attribute is to be used. With the third identification enabling method, as with the second identification enabling method, samples such as the PC sample detected in FIG. 3 are stored in the mdat of the ISOBMFF, their headers storing the size information and type information.

Here, FIG. 28 depicts an outline of the SubSampleInformationBox.

As depicted in FIG. 28, a continuous specific byte region in the sample is defined as a sub-sample. Also, the definition of the sub-sample is fixed for each encoding codec. In a case of HEVC, for example, the NAL unit becomes the sub-sample. Further, in the case of SubSampleInformationBox, information may be added to each sub-sample.

Further, FIG. 29 depicts an outline of the Sample Group.

As depicted in FIG. 29, the grouping_type of the Sample To Group Box indicates the grouping_type of the associated Sample Group Description Box. The sample_count and group_description_index are signaled for each entry. The group_description_index indicates the index of the associated Group Entry, and the sample_count indicates the number of samples belonging to the Group Entry.

### <System configurations>

Explained below with reference to FIGS. 30 and 31 are system configurations of a data generation apparatus and a data reproduction apparatus to which the present technology is applied.

FIG. 30 is a block diagram depicting a configuration example of a data generation apparatus.

As depicted in FIG. 30, a data generation apparatus 51 includes a control section 61 and a file generation section 62. The file generation section 62 includes a data input section 71, a data encoding and generation section 72, an MPD file generation section 73, a recording section 74, and an upload section 75. The data encoding and generation section 72 includes a preprocessing section 76, an encoding section 77, and a segment file generation section 78.

For example, the preprocessing section 76 corresponds to the above-described separation section 21 in FIG. 11. The preprocessing section 76 performs the process of separating the geometry and attributes from the input Point Cloud.

The encoding section 77 corresponds to the above-described encoding section 22 in FIG. 11. The encoding section 77 performs the process of encoding the geometry bitstream and attribute bitstream together with the parameter sets.

The segment file generation section 78 corresponds to the above-described PC stream generation section 23 and file generation section 24 in FIG. 11. The segment file generation section 78 performs the process of generating a PC stream and further generating a file in which the PC stream is stored in the ISOBMFF.

FIG. 31 is a block diagram depicting a configuration example of a data reproduction apparatus.

As depicted in FIG. 31, a data reproduction apparatus 52 includes a control section 81 and a reproduction processing section 82. The reproduction processing section 82 includes an MPD file acquisition section 91, an MPD file processing section 92, a segment file acquisition section 93, a display control section 94, a data analysis and decoding section 95, and a display section 96. The data analysis and decoding section 95 includes a segment file processing section 97, a decoding section 98, and a display information generation section 99.

For example, the segment file processing section 97 corresponds to the above-described extraction section 31 in FIG. 12. The segment file processing section 97 performs the process of extracting the geometry bitstream and attribute bitstreams corresponding to a reproduction time according to the use case.

Also, the decoding section 98 corresponds to the above-described decoding section 32 in FIG. 12. The decoding section 98 performs the process of individually decoding the geometry bitstream and attribute bitstreams.

Also, the display information generation section 99 corresponds to the above-described building section 33 and display processing section 34 in FIG. 12. The display information generation section 99 performs the process of building a Point Cloud, rendering the Point Cloud, and displaying the rendered Point Cloud as a display image.

The present technology, as described above, defines the sample structure that specifies the boundaries of the geometry and attributes and thereby enables the client easily to access the geometry and attributes independently. Further, the present technology separates the Point Cloud stream into the geometry bitstream and attribute bitstream and stores them into two tracks of the ISOBMFF, allowing the client to process each of the tracks separately. Also, as described above, the present technology defines the method of association in the DASH MPD in a case where the geometry and attributes are stored in separate tracks, allowing the client easily to access the geometry and attributes independently.

This enables the client to decode solely the geometry or only a desired attribute from among multiple attributes.

As a result, the client can perform processing efficiently in use cases such as where there is no need for the attribute information such as color and reflection and only the three-dimensional geometry information is to be used out of the point cloud, or where only one of multiple pieces of attribute information such as color and reflection is to be used together with the geometry for preview purposes, for example.

### <Configuration example of the computer>

The series of processes described above (information processing method) may be executed either by hardware or by software. In a case where the series of processing is to be carried out by software, the programs constituting the software are installed into a general-purpose computer, for example.

FIG. 32 is a block diagram depicting a configuration example of a typical computer into which the programs for performing the above-mentioned series of processing are installed.

The programs may be recorded beforehand on a hard disc 105 or in a ROM 103 serving as recording media inside the computer.

Alternatively, the programs may be stored (recorded) on removable recording media 111 driven by a drive 109. Such removable recording media may be offered as what is generally called packaged software. Here, the removable recording media 111 include, for example, a flexible disc, a CD-ROM (Compact Disc Read Only Memory), an MO (Magneto Optical) disc, a DVD (Digital Versatile Disc), a magnetic disc, and a semiconductor memory.

It is to be noted that, besides being installed into the computer from the above-mentioned removable recording media 111, the programs may also be downloaded to the computer over communication networks or broadcast networks and installed onto the internal hard disc 105. That is, the programs may be transferred to the computer wirelessly from a download site, for example, via satellites for digital satellite broadcasting or by wire over networks such as LAN (Local Area Network) and the Internet.

The computer incorporates a CPU (Central Processing Unit) 102. The CPU 102 is connected with an input/output interface 110 via a bus 101.

When a user inputs commands via the input/output interface 110 by operating the input section 107, for example, the CPU 102 accordingly executes the programs stored in a ROM (Read Only Memory) 103. Alternatively, the CPU 102 loads the programs from the hard disc 105 where they are stored into a RAM (Random Access Memory) 104 and executes the loaded programs.

In this manner, the CPU 102 performs processing according to the above-described flowcharts or in ways determined by the configurations in the above-mentioned block diagrams. The CPU 102 then causes the results of the processing to be output from the output section 106, to be transmitted from the communication section 108, and to be recorded to the hard disc 105 via the input/output interface 110.

It is to be noted that the input section 107 includes a keyboard, a mouse, and a microphone, for example. Also, the output section 106 includes an LCD (Liquid Crystal Display) and speakers, for example.

In this description, the processes executed by the computer in accordance with the programs need not be carried out chronologically as depicted in the flowcharts. That is, the processes performed by the computer according to the programs may include those that are conducted parallelly or individually (e.g., parallel processes or object-oriented processes).

Also, the programs may be processed by a single computer (processor) or by multiple computers on a distributed basis. The programs may also be transferred to a remote computer or computers for execution thereby.

Further, in this description, the term "system" refers to an aggregate of multiple components (e.g., apparatuses or modules (parts)). It does not matter whether or not all components are housed in the same enclosure. Thus, a system may include multiple apparatuses housed in separate enclosures and interconnected via a network or include a single apparatus in a single enclosure that houses multiple modules.

Also, any configuration explained in the foregoing paragraphs as one apparatus (or processing section) may be divided into multiple apparatuses (or processing sections). Conversely, the configurations explained above as multiple apparatuses (or processing sections) may be unified into one apparatus (or processing section). Also, the configuration of each apparatus (or processing section) may obviously be supplemented with a configuration or configurations other than those discussed above. Further, part of the configuration of an apparatus (or processing section) may be included in the configuration of another apparatus (or processing section), provided the configurations and the workings remain substantially the same for the system as a whole.

Also, the present technology may be implemented as a cloud computing setup, for example, in which a single function is processed cooperatively by multiple networked apparatuses on a shared basis.

Also, the above-described programs may be carried out by any apparatus. In such a case, the apparatus need only be arranged to have necessary functions (e.g., functional blocks) and acquire necessary information.

Also, for example, each of the steps discussed in reference to the above-described flowcharts may be executed either by a single apparatus or by multiple apparatuses on a shared basis. Furthermore, in a case where a single step includes multiple processes, these processes may be executed either by a single apparatus or by multiple apparatuses on a shared basis. In other words, multiple steps included in a single step may be executed as a process of multiple steps. Conversely, the process explained as made up of multiple steps may be executed as a single step.

It is to be noted that the programs executed by the computer may each be processed chronologically, i.e., in the sequence depicted in this description, in parallel with other programs, or in otherwise appropriately timed fashion such as when the program is invoked as needed. That is, the above steps may be carried out in sequences different from those discussed above as long as there is no conflict between the steps. Furthermore, the processes of the steps describing a given program may be performed in parallel with, or in combination with, the processes of other programs.

It is to be noted that the multiple technologies discussed in this description may each be implemented independently of the others as long as there is no inconsistency therebetween. Obviously, any number of these technologies may be implemented in combination. For example, some or all of the technologies discussed in conjunction with one embodiment may be implemented in combination with some or all of the technologies explained in connection with another embodiment. Further, some or all of any of the technologies discussed above may be implemented in combination with another technology not described above.

### <Typical combinations of the configured components>

It is to be noted that the present technology may be implemented preferably in the following configurations:
(1) An information processing apparatus including:
   a file generation section configured to generate, from 3D data representing a three-dimensional structure, identification information regarding an individual stream of geometry information indicating a geometry of the three-dimensional structure and identification information regarding an individual stream of attribute information indicating an attribute of the three-dimensional structure;
   the file generation section configured to generate a file that includes generated multiple pieces of the identification information.
(2) The information processing apparatus as stated in paragraph (1) above, in which the identification information includes size information indicating a size of each of the streams and type information indicating a type of each of the streams.
(3) The information processing apparatus as stated in paragraph (1) or (2) above, in which the file generation section generates the file in a sample structure specifying boundaries of the geometry information and the attribute information.
(4) The information processing apparatus as stated in any one of paragraphs (1) to (3) above, in which the file generation section stores, into a header of the geometry information in a subsample as part of the file and a header of the attribute information in a subsample as part of the file, size information indicating sizes of the subsamples and type information indicating types of the subsamples, as the identification information.
(5) The information processing apparatus as stated in any one of paragraphs (1) to (3) above, in which the file generation section stores the stream of the geometry information and the stream of the attribute information into one track of ISOBMFF (ISO Base Media File Format), and signals boundaries of the geometry information and the attribute information by use of information regarding subsamples constituting the file.
(6) The information processing apparatus as stated in paragraph (5) above, in which the file generation section stores, into headers of the geometry information and of the attribute information in the subsamples stored in mdat of the ISOBMFF, size information indicating sizes of the subsamples and type information indicating types of the subsamples, as the identification information.
(7) The information processing apparatus as stated in any one of paragraphs (1) to (3) above, in which the file generation section separates the stream of the geometry information and the stream of the attribute information from each other to store each of the streams individually into one track of ISOBMFF, and signals the geometry information and the attribute information by use of information indicating relations of association between the tracks.
(8) The information processing apparatus as stated in any one of paragraphs (1) to (3) above, in which the file generation section separates the stream of the geometry information and the stream of the attribute information from each other to store each of the streams individually into one track of ISOBMFF, and signals the geometry information and the attribute information by use of MPD (Media Presentation Description) of DASH (Dynamic Adaptive Streaming over HTTP).
(9) The information processing apparatus as stated in paragraph (8) above, in which the file generation section stores, into a header of the geometry information in a subsample as part of the file stored in mdat of the ISOBMFF and into a header of the attribute information in another subsample as part of the file, size information indicating sizes of the subsamples and type information indicating types of the subsamples, as the identification information.
(10) An information processing method including:
   causing an information processing apparatus to generate, from 3D data representing a three-dimensional structure, identification information regarding an individual stream of geometry information indicating a geometry of the three-dimensional structure and identification information regarding an individual stream of attribute information indicating an attribute of the three-dimensional structure; and
   causing the information processing apparatus to generate a file that includes generated multiple pieces of the identification information.
(11) A program for causing a computer of an information processing apparatus to perform information processing, the information processing including:
   generating, from 3D data representing a three-dimensional structure, identification information regarding an individual stream of geometry information indicating a geometry of the three-dimensional structure and identification information regarding an individual stream of attribute information indicating an attribute of the three-dimensional structure; and
   generating a file that includes generated multiple pieces of the identification information.
(12) An information processing apparatus including:
   an extraction section configured in such a manner that, given a file that includes identification information regarding an individual stream of geometry information indicating a geometry of a three-dimensional structure represented by 3D data and identification information regarding an individual stream of attribute information indicating an attribute of the three-dimensional structure, the identification information being generated from the 3D data, the extraction section identifiably extracting, from the file, the geometry information and the attribute information according to a use case and on the basis of the identification information; and
   a building section configured to build the three-dimensional structure by use of the geometry information or the attribute information each extracted by the extraction section.
(13) An information processing method including:
   causing an information processing apparatus to operate in such a manner that, given a file that includes identification information regarding an individual stream of geometry information indicating a geometry of a three-dimensional structure represented by 3D data and identification information regarding an individual stream of attribute information indicating an attribute of the three-dimensional structure, the identification information being generated from the 3D data, the information processing apparatus identifiably extracting, from the file, the geometry information and the attribute information according to a use case and on the basis of the identification information; and
   causing the information processing apparatus to build the three-dimensional structure by use of the geometry information or the attribute information each having been extracted.
(14) A program including:
   causing a computer of an information processing apparatus to operate in such a manner that, given a file that includes identification information regarding an individual stream of geometry information indicating a geometry of a three-dimensional structure represented by 3D data and identification information regarding an individual stream of attribute information indicating an attribute of the three-dimensional structure, the identification information being generated from the 3D data, the computer identifiably extracting, from the file, the geometry information and the attribute information according to a use case and on the basis of the identification information; and
   causing the computer to build the three-dimensional structure by use of the geometry information or the attribute information each having been extracted.

It is to be noted that the embodiments of the present disclosure are not limited to those discussed above and may be modified or altered diversely within the scope of the present disclosure. Also, the advantageous effects stated in this description are only examples and not limitative of the present disclosure that may also provide other advantages.

### [Reference Signs List]

- 11 and 12: Information processing apparatus
- 21: Separation section
- 22: Encoding section
- 23: PC stream generation section
- 24: File generation section
- 31: Extraction section
- 32: Decoding section
- 33: Building section
- 34: Display processing section
- 51: Data generation apparatus
- 52: Data reproduction apparatus
- 61: Control section
- 62: File generation section
- 71: Data input section
- 72: Data encoding and generation section
- 73: MPD file generation section
- 74: Recording section
- 75: Upload section
- 76: Preprocessing section
- 77: Encoding section
- 78: Segment file generation section
- 81: Control section
- 82: Reproduction processing section
- 91: MPD file acquisition section
- 92: MPD file processing section
- 93: Segment file acquisition section
- 94: Display control section
- 95: Data analysis and decoding section
- 96: Display section
- 97: Segment file processing section
- 98: Decoding section
- 99: Display information generation section

## Claims

1. An information processing apparatus comprising:
a file generation section configured to generate, from 3D data representing a three-dimensional structure, identification information regarding an individual stream of geometry information indicating a geometry of the three-dimensional structure and identification information regarding an individual stream of attribute information indicating an attribute of the three-dimensional structure;
the file generation section configured to generate a file that includes generated multiple pieces of the identification information.

2. The information processing apparatus according to claim 1,
wherein the identification information includes size information indicating a size of each of the streams and type information indicating a type of each of the streams.

3. The information processing apparatus according to claim 1,
wherein the file generation section generates the file in a sample structure specifying boundaries of the geometry information and the attribute information.

4. The information processing apparatus according to claim 1,
wherein the file generation section stores, into a header of the geometry information in a subsample as part of the file and a header of the attribute information in a subsample as part of the file, size information indicating sizes of the subsamples and type information indicating types of the subsamples, as the identification information.

5. The information processing apparatus according to claim 1,
wherein the file generation section stores the stream of the geometry information and the stream of the attribute information into one track of ISOBMFF (ISO Base Media File Format), and signals boundaries of the geometry information and the attribute information by use of information regarding subsamples constituting the file.

6. The information processing apparatus according to claim 5,
wherein the file generation section stores, into headers of the geometry information and of the attribute information in the subsamples stored in mdat of the ISOBMFF, size information indicating sizes of the subsamples and type information indicating types of the subsamples, as the identification information.

7. The information processing apparatus according to claim 1,
wherein the file generation section separates the stream of the geometry information and the stream of the attribute information from each other to store each of the streams individually into one track of ISOBMFF, and signals the geometry information and the attribute information by use of information indicating relations of association between the tracks.

8. The information processing apparatus according to claim 1,
wherein the file generation section separates the stream of the geometry information and the stream of the attribute information from each other to store each of the streams individually into one track of ISOBMFF, and signals the geometry information and the attribute information by use of MPD (Media Presentation Description) of DASH (Dynamic Adaptive Streaming over HTTP).

9. The information processing apparatus according to claim 8,
wherein the file generation section stores, into a header of the geometry information in a subsample as part of the file stored in mdat of the ISOBMFF and into a header of the attribute information in another subsample as part of the file, size information indicating sizes of the subsamples and type information indicating types of the subsamples, as the identification information.

10. An information processing method comprising:
causing an information processing apparatus to generate, from 3D data representing a three-dimensional structure, identification information regarding an individual stream of geometry information indicating a geometry of the three-dimensional structure and identification information regarding an individual stream of attribute information indicating an attribute of the three-dimensional structure; and
causing the information processing apparatus to generate a file that includes generated multiple pieces of the identification information.

11. A program for causing a computer of an information processing apparatus to perform information processing, the information processing comprising:
generating, from 3D data representing a three-dimensional structure, identification information regarding an individual stream of geometry information indicating a geometry of the three-dimensional structure and identification information regarding an individual stream of attribute information indicating an attribute of the three-dimensional structure; and
generating a file that includes generated multiple pieces of the identification information.

12. An information processing apparatus comprising:
an extraction section configured in such a manner that, given a file that includes identification information regarding an individual stream of geometry information indicating a geometry of a three-dimensional structure represented by 3D data and identification information regarding an individual stream of attribute information indicating an attribute of the three-dimensional structure, the identification information being generated from the 3D data, the extraction section identifiably extracting, from the file, the geometry information and the attribute information according to a use case and on a basis of the identification information; and
a building section configured to build the three-dimensional structure by use of the geometry information or the attribute information each extracted by the extraction section.

13. An information processing method comprising:
causing an information processing apparatus to operate in such a manner that, given a file that includes identification information regarding an individual stream of geometry information indicating a geometry of a three-dimensional structure represented by 3D data and identification information regarding an individual stream of attribute information indicating an attribute of the three-dimensional structure, the identification information being generated from the 3D data, the information processing apparatus identifiably extracting, from the file, the geometry information and the attribute information according to a use case and on a basis of the identification information; and
causing the information processing apparatus to build the three-dimensional structure by use of the geometry information or the attribute information each having been extracted.

14. A program comprising:
causing a computer of an information processing apparatus to operate in such a manner that, given a file that includes identification information regarding an individual stream of geometry information indicating a geometry of a three-dimensional structure represented by 3D data and identification information regarding an individual stream of attribute information indicating an attribute of the three-dimensional structure, the identification information being generated from the 3D data, the computer identifiably extracting, from the file, the geometry information and the attribute information according to a use case and on a basis of the identification information; and
causing the computer to build the three-dimensional structure by use of the geometry information or the attribute information each having been extracted.
